Europäisches Patentamt

European Patent Office

Office européen des brevets

(11) Veröffentlichungsnummer: **0 413 169 A1**

## (12) EUROPÄISCHE PATENTANMELDUNG

(21) Anmeldenummer: 90114039.2

(22) Anmeldetag: 23.07.90

(51) Int. Cl.5: **C21D 9/00**, B21B 1/46, B22D 11/12, F27B 9/38

(30) Priorität: **17.08.89 DE 3927189**

(43) Veröffentlichungstag der Anmeldung:
**20.02.91 Patentblatt 91/08**

(84) Benannte Vertragsstaaten:
**AT BE CH DE DK ES FR GB GR IT LI LU NL SE**

(71) Anmelder: **SMS SCHLOEMANN-SIEMAG AKTIENGESELLSCHAFT**
**Eduard-Schloemann-Strasse 4**
**D-4000 Düsseldorf 1(DE)**

(72) Erfinder: **Bohnenkamp, Heinrich**
**Am Kreuzfeld 43**
**D-4040 Neuss(DE)**

(74) Vertreter: **Müller, Gerd et al**
**Patentanwälte**
**HEMMERICH-MÜLLER-GROSSE-POLLMEIER--**
**MEY-VALENTIN Hammerstrasse 2**
**D-5900 Siegen 1(DE)**

(54) Anlage zur Herstellung von Stahlband.

(57) Bei einer Anlage zur Herstellung von Stahlband sind einer oder mehreren Stahlbandgießanlagen ein Temperaturausgleichofen (4), eine Quertransportvorrichtung (6) für Stahlbandabschnitte und ein Fertigwalzwerk (9) nachgeordnet.

Zur Verringerung des Investionsaufwandes und des Flächenbedarfs und zur Verbesserung der Temperaturführung ist das Fertigwalzwerk (9) entgegengesetzt zur Ausförderrichtung der Stahlbandgießanlage (2) mit seitlichem Versatz angeordnet, wobei neben dem in Auslaufrichtung der Stahlbandgießanlage (2) fördernden Temperaturausgleichofen (4) ein weiterer entgegengesetzt in Richtung Fertigwalzwerk (9) fördernden Temperaturausgleich ofen (7) angeordnet ist und die nebeneinander angeordnete Temperaturausgleichöfen (4, 7) durch eine stirnseitige Quertransportvorrichtung (6) verbunden sind.

Fig.1

## ANLAGE ZUR HERSTELLUNG VON STAHLBAND

Die Erfindung betrifft eine Anlage zur Herstellung von Stahlband, wobei einer oderer mehreren Stahlbandgießanlagen ein Temperaturausgleichofen, eine Quertransportvorrichtung für Stahlbandabschnitte und ein Fertigwalzwerk nachgeordnet sind.

Bei einer bekannten Anlage zur Herstellung von Stahlband sind einer Zweistranggießanlage zwei Ausgleichsöfen nachgeordnet, an deren Enden sich eine Querfähre für abgetrennte Stahlbandabschnitte befindet. Durch die Querfähre werden die Stahlbandabschnitte vor einen Temperaturhalteofen gebracht, nach dessen Durchlauf sie in einem Fertigwalzwerk ausgewalzt werden. Diese Anlage ist kostenaufwendig und erfordert viel Platz.

Aufgabe der Erfindung ist die Schaffung einer Anlage zur Herstellung von Stahlband mit einem geringeren Investitionskosten- und Flächenbedarf. Darüber hinaus soll die Temperaturführung des Stahlbandes vor dem Walzwerk verbessert werden.

Diese Aufgabe wird nach der Erfindung dadurch gelöst, daß das Fertigwalzwerk entgegengesetzt zur Ausförderrichtung der Stahlbandgießanlage mit seitlichem Versatz angeordnet ist, wobei neben dem in Auslaufrichtung der Stahlbandgießanlage fördernden Temperaturausgleichofen ein weiterer entgegengesetzt in Richtung Fertigwalzwerk fördernden Temperaturausgleichofen angeordnet ist und die nebeneinander angeordnete Temperaturausgleichöfen durch eine stirnseitige Quertransportvorrichtung verbunden sind.

Auf diese Weise kann die zur Verfügung stehende Hallenfläche besser ausgenutzt werden. Trotz der erzielten Einsparung von Ofenraum kann die Temperatur des Stahlbandes unmittelbar vor dem Walzwerk in einer relativ langen lückenlosen Ofenstrecke genau eingestellt werden.

Nach einer besonders vorteilhaften Ausgestaltung der Erfindung ist bei zwei nebeneinander angeordneten Stahlbandgießanlagen eine in Richtung Walzstraße fördernde Ofenlinie zwischen den den Giessanlagen nachgeordneten Temperaturausgleichöfen angeordnet.

Weiterhin hat sich bewährt, daß die in Richtung Walzstraße fördernde Ofenlinie aus einem Temperaturausgleichofen und einem daran anschließenden Temperaturhalteofen besteht.

Die Temperaturausgleichöfen und der Temperaturhalteofen sind vorteilhaft als Rollenherdöfen ausgebildet.

Benachbarte Temperaturausgleichöfen können zur Energieeinsparung in einem gemeinsamen Ofengehäuse angeordnet sein.

Die Quertransportvorrichtung kann als mit Wärmedämmhauben versehene Schleppeinrichtung oder als beheizte Ofenfähre ausgebildet sein.

Gemäß einem weiteren Merkmal weist die Quertransportvorrichtung ein Zwischenlager für Stahlbandabschnitte auf.

In der Zeichnung sind Ausführungsbeispiele mit Merkmalen der Erfindung dargestellt.

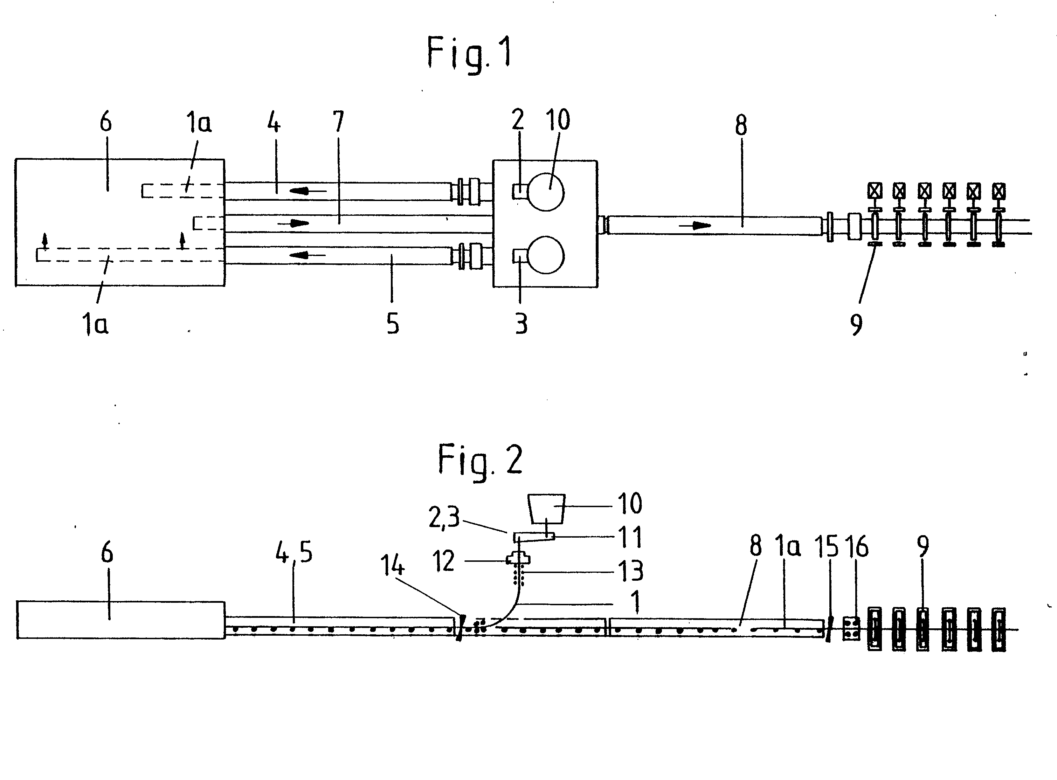

Fig. 1 eine Anlage zur Herstellung von Stahlbändern im Grundriß und

Fig. 2 eine Seitenansicht der Anlage.

Die schematisch dargestellte Anlage zum Gießen von Stahlband 1 besteht aus den Teilen Stranggießanlagen 2, 3, Temperaturausgleichöfen 4, 5, Quertransportvorrichtung 6, Temperaturausgleichofen 7, Temperaturhalteofen 8 und Fertigwalzstraße 9.

Die mit Gießpfanne 10, Zwischenbehälter 11, Kokille 12, Strangführung 13 dargestellten Stranggießanlagen 2, 3 sind im Abstand voneinander angeordnet. Das vertikal gegossene Stahlband 1 wird in die Horizontale umgeleitet und in die als Rollenherdofen ausgebildeten Temperaturausgleichöfen 4, 5 eingeleitet. Zwischen den Stranggießanlagen und dem Temperaturausgleichöfen sind Scheren 14 angeordnet, durch die das Stahlband 1 in Abschnitte 1a unterteilt wird.

Aus den Temperaturausgleichöfen 4, 5 werden die Stahlbandabschnitte 1a in die Quertransportvorrichtung 6 gefördert und gegebenenfalls nach Zwischenlagerung in die Förderachse des entgegengesetzt fördernden Temperaturausgleichofens 7 gebracht und mit erhöhter Geschwindigkeit ausgefördert. Die Quertransportvorrichtung 6 kann als Ofenfähre oder als Querschleppeinrichtung mit zugeordneten Warmhaltehauben ausgebildet sein.

Durch den Temperaturausgleichofen 7 werden die Stahlbandabschnitte 1a beschleunigt aus der Quertransportvorrichtung 6 heraus und in den nachgeordneten Temperaturhalteofen 8 hineingefördert. Vor dem Anstich im Fertigwalzwerk 9 erfolgt gegebenenfalls ein Schopfschnitt durch die Schere 15 und eine Entzunderung im Zunderwäscher 16.

Die Erfindung ist nicht auf das dargestellte Ausführungsbeispiel beschränkt. Insbesondere ist eine Realisierung bei einer einzigen Stranggießanlage mit gleichen Vorteilen möglich.

**Ansprüche**

1. Anlage zur Herstellung von Stahlband, wobei einer oder mehreren Stahlstranggießanlagen ein Temperaturausgleichofen, eine Quertransportvorrichtung für Stahlbandabschnitte und ein Fertigwalzwerk nachgeordnet sind, dadurch gekennzeichnet,

daß das Fertigwalzwerk (9) entgegengesetzt zur Ausförderrichtung der Stahlbandgießanlage (2) mit seitlichem Versatz angeordnet ist, wobei neben dem in Auslaufrichtung der Stahlbandgießanlage (2) fördernden Temperaturausgleichofen (4) ein weiterer entgegengesetzt in Richtung Fertigwalzwerk (9) fördernden Temperaturausgleichofen (7) angeordnet ist und die nebeneinander angeordnete Temperaturausgleichöfen (4, 7) durch eine stirnseitige Quertransportvorrichtung (6) verbunden sind.

2. Anlage nach Anspruch 1,

dadurch gekennzeichnet,

daß bei zwei nebeneinander angeordneten Stahlbandgießanlage (2,3) eine in Richtung Walzstraße (9) fördernde Ofenlinie (7, 8) zwischen den den Gießanlagen (2, 3) nachgeordneten Temperaturausgleichöfen (4, 5) angeordnet ist.

3. Anlage nach Anspruch 1,

dadurch gekennzeichnet,

daß die in Richtung Walzstraße (9) fördernde Ofenlinie aus einem Temperaturausgleichofen (7) und einem Temperaturhalteofen (8) besteht.

4. Anlage nach Anspruch 1 und 3,

dadurch gekennzeichnet,

daß die Temperaturausgleichöfen (4, 5, 7) und der Temperaturhalteofen (8) als Rollenherdöfen ausgebildet sind.

5. Anlage nach Anspruch 1,

dadurch gekennzeichnet,

daß benachbarte Temperaturausgleichöfen (4, 5, 7) in einem gemeinsamen Ofengehäuse angeordnet sind.

6. Anlage nach Anspruch 1,

dadurch gekennzeichnet,

daß die Quertransportvorrichtung (6) als mit Wärmedämmhauben versehene Schleppeinrichtung ausgebildet ist.

7. Anlage nach Anspruch 1,

dadurch gekennzeichnet,

daß die Quertransportvorrichtung (6) als beheizte Ofenfähre ausgebildet ist.

8. Anlage nach Anspruch 1,

dadurch gekennzeichnet,

daß die Quertransportvorrichtung (6) ein Zwischenlager für Stahlbandabschnitte (1a) aufweist.

# Fig.1

# Fig. 2

EP 0 413 169 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 708 050 (VOEST-ALPINE) <br> * Spalte 4, Zeilen 5-61; Figur 1 * | 1-4 | C 21 D 9/00 <br> B 21 B 1/46 <br> B 22 D 11/12 <br> F 27 B 9/38 |
| A | --- | 8 | |
| Y | US-A-4 289 944 (T.F. REESE) <br> * Spalte 4, Zeile 40 - Spalte 5, Zeile 22; Figur 14 * | 1-4 | |
| A | --- | 5 | |
| A | DE-A-3 520 403 (MANNESMANN AG) <br> * Spalte 3, Zeilen 6-15; Spalte 4, Zeilen 32-45; Figuren * | 6,7 | |
| A | DE-A-3 508 060 (MANNESMANN AG) <br> * Patentanspruch; Figur * <br> --- | 6,7 | |
| A | PATENT ABSTRACTS OF JAPAN, Band 9, Nr. 130 (C-234)[1853], 5. Juni 1985; & <br> JP-A-60 17 015 (NIPPON KOKAN K.K.) 28-01-1985 <br> * Zusammenfassung; Figur * <br> --- | 6 | |
| A | EP-A-0 302 257 (DANIELI) <br> * Patentansprüche; Figur 1 * <br> --- | 1-5 | RECHERCHIERTE SACHGEBIETE (Int. Cl.5) <br><br> B 21 D <br> B 22 D <br> C 21 D <br> F 27 B |
| A | DE-A-3 525 457 (MANNESMANN AG) <br> * Patentansprüche 2,3; Figur * <br> --- | 3-6 | |
| A | PATENT ABSTRACTS OF JAPAN, Band 6, Nr. 249 (M-177)[1127], 9. Dezember 1982; & <br> JP-A-57 146 404 (KAWASAKI SEITETSU) 09-09-1982 <br> * Figur * <br> --- | 1 | |
| | | -/- | |

Der vorliegende Recherchenbericht wurde für alle Patentansprüche erstellt

| Recherchenort | Abschlußdatum der Recherche | Prüfer |
|---|---|---|
| DEN HAAG | 26-11-1990 | BOMBEKE M.J.P. |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | STEEL TIMES, Nr. 7, Juli 1989, Seite 385, Redhill, GB; "Improving hot mills with encopanels" | | |
| A | EP-A-0 319 808 (SMS SCHLOEMANN-SIEMAG) * Patentansprüche 1,2,4,5; Figuren * | 1,5 | |
| A | US-A-4 170 815 (T. TOKITSU) | | |

RECHERCHIERTE
SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 26-11-1990 | BOMBEKE M.J.P. |

EPO FORM 1503 03.82 (P0403)